(19) **Europäisches Patentamt / European Patent Office / Office européen des brevets**

(11) **EP 1 742 169 B1**

(12) **EUROPEAN PATENT SPECIFICATION**

(45) Date of publication and mention
of the grant of the patent:
**22.02.2012 Bulletin 2012/08**

(51) Int Cl.:
*G06T 7/20* (2006.01)

(21) Application number: **06253438.3**

(22) Date of filing: **30.06.2006**

(54) **Tracking apparatus**

Tracking-Vorrichtung

Appareil de suivi

(84) Designated Contracting States:
**AT BE BG CH CY CZ DE DK EE ES FI FR GB GR HU IE IS IT LI LT LU LV MC NL PL PT RO SE SI SK TR**

(30) Priority: **05.07.2005 JP 2005196342**

(43) Date of publication of application:
**10.01.2007 Bulletin 2007/02**

(73) Proprietor: **OMRON CORPORATION**
**Kyoto-shi, Kyoto 600-8530 (JP)**

(72) Inventors:
• **Kinoshita, K.,**
**Omron Corp., 801 Minamifudodo-cho**
**Kyoto-shi**
**Kyoto 600-8530 (JP)**
• **Tsukiji, S.,**
**Omron Corp., 801 Minamifudodo-cho**
**Kyoto-shi**
**Kyoto 600-8530 (JP)**
• **Matsuoka, Miki,**
**Omron Corp., 801 Minamifudodo-cho**
**Kyoto-shi**
**Kyoto 600-8530 (JP)**
• **Yamashita, T.,**
**Omron Corp., 801 Minamifudodo-cho**
**Kyoto-shi**
**Kyoto 600-8530 (JP)**

(74) Representative: **Calderbank, Thomas Roger et al**
**Mewburn Ellis LLP**
**33 Gutter Lane**
**London**
**EC2V 8AS (GB)**

(56) References cited:

US-A- 5 280 530

• MICILOTTA AND R BOWDEN A S: "View-based Location and Tracking of Body Parts for Visual Interaction" PROCEEDINGS OF THE BRITISH MACHINE VISION CONFERENCE, XX, XX, vol. 2, 1 September 2004 (2004-09-01), pages 849-859, XP002392458
• Antonio S. Micilotta: "Detection and Tracking of Humans for Visual Interaction" Thesis submitted for the Degree of Doctor of Philosophy from the University of Surrey September 2005 (2005-09), pages 21-58, XP002577754 Retrieved from the Internet: URL:http:// public.amicilotta.airpost.net/d ocuments/ micilotta_PhD_Thesis.pdf> [retrieved on 2010-04-15]
• PEREZ P ET AL: "Color Based Probabilistic Tracking" EUROPEAN CONFERENCE ON COMPUTER VISION, BERLIN, DE, 27 May 2002 (2002-05-27), pages 661-675, XP002328867
• BLAKE A ET AL: "Data Fusion for Visual Tracking With Particles" PROCEEDINGS OF THE IEEE, IEEE. NEW YORK, US LNKD- DOI: 10.1109/JPROC.2003.823147, vol. 92, no. 3, 1 March 2004 (2004-03-01), pages 495-513, XP011108678 ISSN: 0018-9219
• K. NUMMIARO ET AL.: "Object tracking with an adaptive color-based particle filter" LECTURE NOTES IN COMPUTER SCIENCE, vol. 2449, 2002, pages 353-360, XP002577755
• H. NAIT-CHARIF ET AL.: "Head tracking and action recognition in a smart meeting room" PROC. IEEE WORKSHOP ON PERFORMANCE EVALUATION OF TRACKING AND SURVEILLANCE, 31 March 2003 (2003-03-31), XP002577756 Graz (Austria)

**Description**

The present invention relates to an effective technology which is applied to an apparatus and a method for tracking a face of a person in an image.

Recently, a technology for realizing a process of detecting and tracking a person from a still image or a dynamic picture image (hereinafter referred to as "person tracking process") attracts attention. In the technology, usually a face of a person is used as a detecting and tracking target. This is because the face has both features common with everyone and features different in each person. That is, when the target is set at the face, the face can be detected with the features common with everyone, and an individual can be identified with the features different in each person.

The conventional person tracking process is usually performed as follows. First, the faces of the human are detected from the image to identify face regions using the features common with everyone. Then, a tracking target is selected from the detected faces. Sometimes the selection is automatically performed by performing an individual identification process for each face, and sometimes the selection is performed by visual observation of the human. When the tracking target is selected, face detection is performed in a neighbor (hereinafter referred to as "next detection region") of a position where the face is detected in the previous process. Then, the individual identification process is performed for the detected face to realize the tracking. There is also proposed a technology in which, even in the case of failure of the identification process, the position of the person is estimated to continue the tracking based on recognition result of speech direction recognition or skin color recognition (refer to, for example, Japanese Patent Application Laid-Open No. 2004-283959).

However, there are the following problems in the conventional technology in which the person is tracked from the dynamic picture image or the like while the face is set at the detection and tracking target. First, there is a problem that the tracking is hardly performed in the case where the face is hidden behind an obstacle or in the case where the face turns away or turns around. Even if the speech direction recognition is performed, there is a problem that the effective result is not obtained in the case where a subject does not speak or under a noisy condition. Second, there is a problem that the individual identification process is not suitable for the person tracking process in the dynamic picture image which requires repetition of the performance, because it takes a long time to perform the individual identification process.

Therefore, in order to enhance robustness to achieve speed-up of the process, there is proposed a technology in which the tracking of the person is realized by setting clothes color of the person at the tracking target. A technology, in which the tracking is performed by setting the color whose area becomes the maximum in the subject in a distance measuring frame at the clothes color, is proposed as a specific example of the technology (refer to, for example, Japanese Patent Application Laid-Open No. 06-22195). Generally, because the clothes color is frequently kept constant independently of a direction of the face, the robustness can be enhanced by tracking the clothes color. The process becomes easy by setting the color at the tracking target, so that the speed-up can be achieved in the process.

Other prior art documents which teach to take into account the image context (especially the torso) during face tracking include:

   A. Micilotta et al. - " View-based Location and Tracking of Body Parts for Visual Interaction" - Proc. British Machine Vision Conference (BMCV'2004), 7-9 Sept. 2004;

   Pérez et al. - "Color-Based Probabilistic Tracking", European Conference on Computer Vision (ECCV'2002), Lecture Notes in Computer Science (LNCS 2350), pp. 661-675, 2002.

However, there are problems in the above technology. For example, the tracking target is wrongly detected and the incorrect subject is set at the tracking target when another color region having the area larger than that of the cloth of the person who should be subject exists in the distance measuring frame. Furthermore, there is a possibility that the incorrect subject is tracked when the plural subjects having the same color as the tracking target exist around the tracking target.

In order to solve the problems, it is thought that the wrong detection and the wrong tracking are prevented by previously performing a learning process for the clothes. However, because usually the clothes are daily changed, it is not effective to perform the detection and tracking by the learning.

In view of the foregoing, an object of the present invention is to provide the apparatus and method for being able to improve the robustness of the process of tracking the person in the dynamic picture image. In other words, an object of the present invention is to provide the apparatus and method, in which the tracking of the subject can be continued even if the case where the face of the tracking target cannot be detected is generated in the dynamic picture image.

A tracking apparatus of the present invention which tracks a face position in a dynamic picture image, the tracking apparatus includes a face detection device which detects a face from the image; a storage device in which ambient information, being image feature information in a region near the face of its tracking target, obtained from a region determined by a relative positional relationship with the face position is stored in association with the face position detected by the face detection device; and an estimation device which determines plural position candidates of the current face based on the most recently detected face position instead of the face detection by the face detection device, the estimation device obtaining the plural pieces of ambient information corresponding to the position candidates respectively, the estimation device determining the current face position based on the position candidate in which the ambient information being most similar to the ambient information associated with the most recently detected face position is obtained, wherein the size of said ambient information obtaining region is changed according to the face direction. The most recently detected face may be the face detected in the immediately preceding image or the face detected in the latest plural images.

In the tracking apparatus having the above configuration, the estimation can be performed without detecting the face from the image in estimating the current face position. Therefore, even if the face is hardly detected such that the face of the tracking target is hidden in the shadow or such that the face turns around, the tracking can be continued without losing sight of the face of the tracking target.

Further, the tracking apparatus-of the invention further includes a motion information obtaining device which obtains motion information on the face based on the most recently detected face position, wherein the estimation device determines the position candidate based on the most recently detected face position and the motion information.

Further, in the tracking apparatus of the invention, a feature is stored in the storage device while associated, the face detection device determines whether or not the detected face is identical to the most' recently detected face based on the feature of the detected face and the feature of the most recently detected face, and the estimation device estimates the face position which is not detected by the face detection device of faces whose feature quantities is stored in the storage device.

In the case of the above configuration, the process by the estimation device is performed only to the tracking target whose face is not detected by the face detection device. The face position obtained by the estimation device is frequently inferior to the face position obtained by the face detection device in accuracy. Therefore, the above configuration enables the face position to be detected and estimated with higher accuracy.

Further, in the tracking apparatus of the invention, the estimation device determines the position candidate as the current face position, the ambient information which is most similar to the ambient information associated with the most recently detected face position being obtained in the position candidate. Further, in the tracking apparatus of the invention, the estimation device detects the most face-like region from the position candidate and a neighbor thereof, the ambient information which is most similar to the ambient information associated with the most recently detected face position being obtained in the position candidate, and the estimation device determining the detected region as the current face position.

Further, in the tracking apparatus of the invention, a relative positional relationship between the face position and the ambient information obtaining region is set such that a relative speed between the face position and the ambient information obtaining region becomes the minimum.

Further, in the tracking apparatus of the invention, a range of the ambient information obtaining region is changed according to the face direction.

A tracking method of the present invention for tracking a face position in a dynamic picture image, the tracking method includes a step of detecting a face from the image using an information processing device; a step of storing ambient information obtained from a region in association with the detected face position detected using the information processing device, the region being determined by a relative positional relationship with the face position; a step of determining plural position candidates of the current face based on the most recently detected face position using the information processing device; a step of obtaining plural pieces of ambient information corresponding to the position candidates using the information processing device; and a step of determining the current face position based on the position candidate using the information processing device instead of the step of detecting the face, the ambient information which is most similar to the ambient information associated with the most recently detected face position being obtained in the position candidate. A program of the present invention which causes an information processing device to track a face position in a dynamic picture image, wherein the program which causes the information processing device to execute the steps of: detecting a face from the image; storing ambient information obtained from a region determined by a relative positional relationship with the face position in association with the detected face position detected; determining plural position candidates of the current face based on the most recently detected face position; obtaining plural pieces of ambient information corresponding to the position candidates; and determining the current face position based on the position candidate instead of the step of detecting the face, the ambient information which is most similar to the ambient information associated with the most recently detected face position being obtained in the position candidate.

According to the invention, the subject tracking can be continued even if the face of the tracking target cannot be detected in the dynamic picture image.

In the drawings:

FIG. 1 shows a functional block example of a tracking apparatus;

FIG. 2 shows a specific example of target information;

FIG. 3 shows a specific example of ambient information;

FIG. 4 shows a flowchart of an operation example of the tracking apparatus; and

FIG. 5 shows a flowchart of the operation example of the tracking apparatus;

F1G. 6 shows a setting example of an ambient information obtaining region in consideration of a face inclination;

FIG. 7 shows a setting example of the ambient information obtaining region in consideration of a speed relative to a face; and

FIG. 8 shows a setting example of the ambient information obtaining region in consideration of a face direction.

The tracking target is set at a human in a below-mentioned tracking apparatus, and the tracking apparatus is configured to detect a human face to realize the tracking. However, the below-mentioned tracking apparatus is only one of specific examples. That is, the tracking target is not necessarily limited to the human, and the detection target is not limited to the face when the human is tracked.

(System Configuration)

A configuration example of a tracking apparatus 1 will be described below. In a hardware configuration, the tracking apparatus 1 includes CPU (Central Processing Unit) connected through a bus, a main storage device (RAM), and an auxiliary storage device. The auxiliary storage device is formed with a non-volatile storage device. As used herein, the non-volatile storage device shall mean so-called ROM (Read-Only Memory, including EPROM (Erasable Programmable Read-Only Memory), EEPROM (Electrically Erasable Programmable Read-Only Memory), and a mask ROM), FRAM (Ferroelectric RAM), and a hard disk drive.

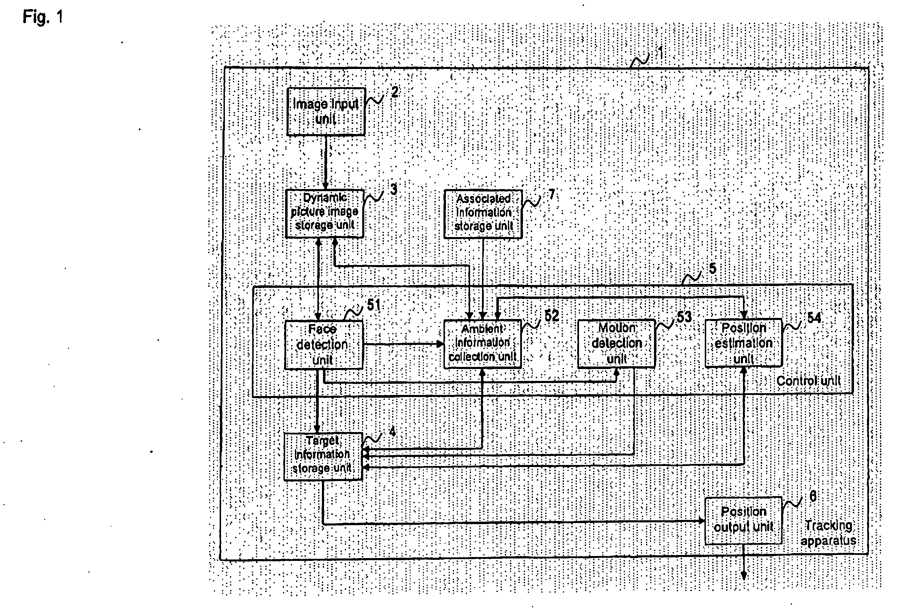

FIG. 1 is a view showing a functional block of the tracking apparatus 1. In the tracking apparatus 1, various programs (OS, applications, and the like) stored in the auxiliary storage device is loaded on the main storage device and executed by CPU, and thereby the tracking apparatus 1 functions as an apparatus including an image input unit 2, a dynamic picture image storage unit 3, a target information storage unit 4, a control unit 5, a position output unit 6, and an associated information storage unit 7. CPU executes the program to realize the control unit 5. The control unit 5 may be formed by a dedicated chip. Then, each functional unit included in the tracking apparatus 1 will be described.

(Image Input Unit)

The image input unit 2 functions as an interface which inputs the dynamic picture image data to the tracking apparatus 1. The dynamic picture image data is inputted to the tracking apparatus 1 by the image input unit 2. The image input unit 2 may be formed by any already-existing technology in which the dynamic picture image data is inputted to the tracking apparatus 1.

(Dynamic Picture Image Storage Unit)

The dynamic picture image storage unit 3 is formed with the storage device. Any specific technology such as a volatile storage device and a non-volatile storage device may be applied to the storage device used in the dynamic picture image storage unit 3. As used herein the volatile storage device shall mean so-called RAM (Random Access Memory, including DRAM (Dynamic RAM), SDRAM (Synchronous DRAM), and DDR SDRAM (Double Data Rate SDRAM) and the like).

The dynamic picture image data inputted through the image input unit 2 is stored in the dynamic picture image storage unit 3. The dynamic picture image data stored in the dynamic picture image storage unit 3 is read by the control unit 5. The dynamic picture image storage unit 3 retains the dynamic picture image data which becomes the target in the process at least until the process is completed by the control unit 5.

(Target Information Storage Unit)

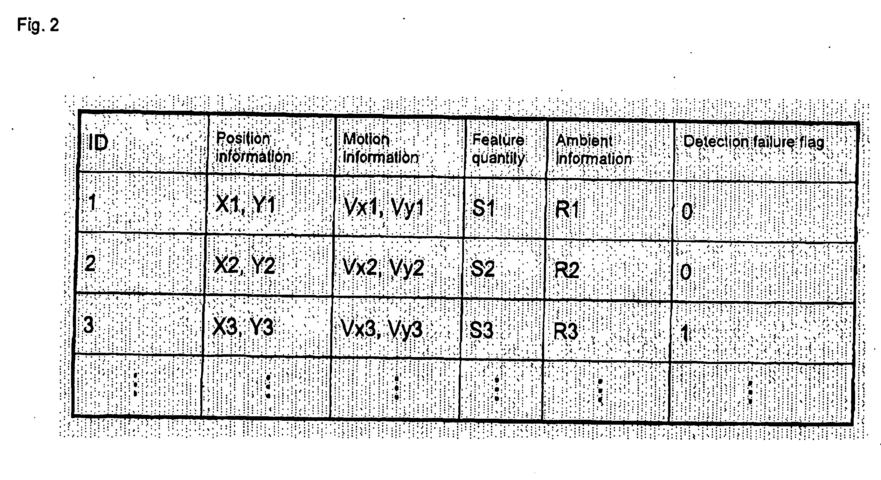

The target information storage unit 4 is formed with the storage device. Similarly to the dynamic picture image storage unit 3, any specific technology may be applied to the storage device used in the target information storage unit 4. Target information on each tracking target is stored in the target information storage unit 4. FIG. 2 is a view showing a specific example of the target information. The target information storage unit 4 is configured such that, for example, ID, position information, motion information, a feature, ambient information, and a detection failure flag are correlated with each tracking target. The.details and specific examples of the position information, the motion information, the feature, the ambient information, and the detection failure flag will be described later along with the control unit 5. Then, each item will briefly be described.

ID is an identifier which indicates the tracking target. The position information is information obtained by the control unit 5, and the position information is information indicating the position in the image of the tracking target. The motion information is information obtained by the control unit 5, and the motion information is information indicating the motion in the image of the tracking target. The feature is information which is used when the control unit 5 identifies the face of the tracking target. The ambient information is feature information in a region near the face of the tracking target. The detection failure flag is information indicating whether or not the face of the tracking target is detected in the current face detection process. Setting the detection failure flag means that the position cannot be detected in the face detection process, a tracking process (specifically, position estimation process by a position estimation unit 54) different from the face detection process is performed to such tracking targets.

(Control Unit)

CPU or the like executes the program to realize the control unit 5. The control unit 5 includes a face detection unit 51, an ambient information collection unit 52, a motion detection unit 53, and the position estimation unit 54. Then, each functional unit will be described.

(Face Detection Unit)

The face detection unit 51 reads the image data from the dynamic picture image storage unit 3 to detect the human face from the image, and the face detection unit 51 identifies face information indicating the detected face position or size. The face detection unit 51 may be configured to detect the face by template matching using a reference template corresponding to an outline of the whole face. The face detection unit 51 may also be configured to detect the face by template matching based on a constituent (eye, nose, ear, and the like) of the face. The face detection unit 51 may also be configured such that a top such as a head is detected by a chroma key process and then the face is detected based on the top. The face detection unit 51 may also be configured such that a region near a skin color is detected and then the region is detected as the face. The face detection unit 51 may also be configured such that learning with teacher signal is made using a neural network to detect a face-like region as the face. The face detection process by the face detection unit 51 may be realized by applying any already-existing technology.

The face detection unit 51 obtains the feature from the detected face. The face detection unit 51 obtains the feature in the form of a brightness distribution, a color histogram, or the like in a particular region including the detected face. The obtained feature is stored in the target information storage unit 4.

The face detection unit 51 determines whether or not the tracking target of each detected face is the tracking target already stored in the target information storage unit 4. For example, the face detection unit 51 obtains the feature from the image, and the face detection unit 51 makes the determination by comparing the obtained feature to the feature stored in the target information storage unit 4. The comparison can be performed by obtaining a degree of similarity in the form of a normalized correlation of the brightness distribution, a histogram intersection of the color histogram, or the like. That is, it is determined whether or not the similarity exists, and it can be determined that the detected person and the person who is of the tracking target are one and the same when the similarity exists. At this point, the face detection unit 51 may be configured to perform the comparison using only the feature associated with the target information having the position information close to the detected face position. Then, the face detection unit 51 sets the detection failure flag of the tracking target which is not detected in the current detection process in the tracking targets stored in the target information storage unit 4.

(Ambient Information Collection Unit)

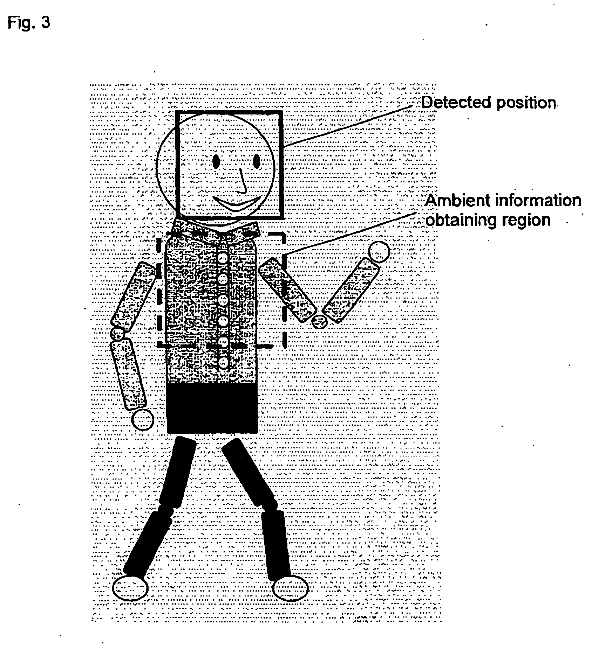

The ambient information collection unit 52 obtains ambient information based on the face position detected by the face detection unit 51 or the face position estimated by the position estimation unit 54. FIG. 3 is a view showing a specific example of the ambient information. Then, the specific example of the process performed by the ambient information collection unit 52 will be described with reference to FIG. 3.

First, the ambient information collection unit 52 determines an ambient information obtaining region based on the face position (corresponding to the detected position of FiG. 3) detected by the face detection unit 51 in the current detection process or the face position estimated by the position estimation unit 54. The position of the ambient information obtaining region is determined by a relative relationship with the face position. Similarly the size of the ambient information obtaining region is determined by a relative relationship with the face size. A parameter for determining the relative relationship between the face and the ambient information obtaining region is stored in the associated information storage unit 7. The ambient information collection unit 52 determines a predetermined region located around the detected position by referring to the parameter stored in the associated information storage unit 7. Specifically the ambient information collection unit 52 may determine the ambient information obtaining region as follows.

Assuming that a center of the detected position is set at P=(X,Y) and a length of one side of a rectangular shape indicating a face region (rectangular shape indicating the detected position) is set at D, a center R, a width W, a height H of a rectangle indicating the ambient information obtaining region can be expressed by the following formula (1). In the formula (1), the face region is expressed by a square, which allows the necessary amount of information for expressing the face region to be decreased to achieve the speed-up of the process. However, the technique of expressing the face region is not limited to the square. The position and size of the face can be expressed more exactly using a rectangle or a polygon. When the position and size of the face is correctly expressed, the position arid size of the ambient information obtaining region can be determined more exactly.

**[Formula 1]**

Rectangle center coordinate: $R=(X,Y+\alpha D)$

Rectangle width: $W=\beta D$

Rectangle height: $H=\gamma D$ ...... (1)

Where $\alpha$, $\beta$, and $\gamma$ are a constant, and $\alpha$, $\beta$, and $\gamma$ are a parameter stored in the associated information storage unit 7. The parameters $\alpha$, $\beta$, and $\gamma$ are previously determined such that the ambient information obtaining region is arranged in a body portion of the person.

For example, the parameters $\alpha$, $\beta$, and $\gamma$ are determined by determining relative distances between the faces and the bodies or relative sizes to obtain an average of the relative distances or the relative sizes in various persons.

Then, the ambient information collection unit 52obtains the ambient information such as an area maximum color, the color histogram, a silhouette, texture information in the ambient information obtaining region.

The specific process in which the ambient information collection unit 52 obtains the ambient information will be described below.

In the case where the area maximum color is used as the ambient information, the ambient information collection unit 52 performs the following process. For example, the ambient information collection unit 52 divides each axis of an RGB space into Q regions (Q is an integer not lower than 1), and the ambient information collection unit 52 counts the number of pixels included in each region of the ambient information obtaining region. This is called color histogram. The number of pixels of each region can be expressed by the following formula (2). At this point, the number of pixels of the ambient information obtaining region can be expressed by the following formula (3). The area maximum color means a color of the region indicated by i in which a value of Mi becomes the maximum in the formulas (2) and (3).

**[Formula 2]**

$$\tilde{M}_i\,(i=1\cdots N),\ N=Q^3 \quad ...... (2)$$

**[Formula 3]**

$$\sum_i \tilde{M}_i \quad ...... (3)$$

In the case where the color histogram is used as the ambient information, the ambient information collection unit 52 produces the normalized histogram as shown in the following formula (4). In the normalized histogram, a value of each histogram element is divided by the number of pixels expressed by the formula (3).

**[Formula 4]**

$$M_i = \frac{\tilde{M}_i}{\sum_j M_j} \qquad \ldots\ldots (4)$$

In the case where the silhouette is used as the ambient information, the ambient information collection unit 52 determines edge information from the image (brightness value) of the ambient information obtaining region by, e.g., a Laplacian filter. The obtained ambient information is stored in the target information storage unit 4 in association with each tracking target.

(Motion Detection Unit)

The motion detection unit 53 computes the motion in the image with respect to the face of each tracking target to generate the motion information based on the detection result of the face detection unit 51. The motion detection unit 53 also generates the motion information with respect to the face of the tracking target, which is not detected by the face detection unit 51, based on the position estimated by the position estimation unit 54. The motion information generated by the motion detection unit 53 is stored in the target information storage unit 4.

For example, the motion detection unit 53 generates the motion information by the following process. Assuming that a face detection coordinate (rectangular center coordinate) is set at $P1=(X1,Y1)$ in the previous frame on the input image and a face detection coordinate is set at $P2=(X2,Y2)$ in the current frame, motion information $V=(Vx,Vy)$ is expressed as shown in the following formula (5). An interval between the previous frame and the current frame is expressed by T.

**[Formula 5]**

$$V = (P2-P1)/T \qquad \ldots\ldots (5)$$

(Position Estimation Unit)

The position estimation unit 54 estimates the current position of the tracking target in which the detection failure flag is set. The position estimation unit 54 estimates a rough position $P'=(X',Y')$ of the current face based on the position information, which is stored in the target information storage unit 4 as the previous detection result, and the motion information generated by the motion detection unit 53. For example, the estimation can be performed using the following formula (6).

**[Formula 6]**

$$P' = P2+VT \qquad \ldots\ldots (6)$$

Then, the position estimation unit 54 generates plural estimation positions (position candidates) $E1=(Xe1,Ye1)$, $E2=(Xe2,Ye2)$, ..., and $EN=(XeN,YeN)$ by adding a set of proper random numbers $(x,y)$ to $X'$ and $Y'$ indicating the rough position. Where N is the number of sets of generated random numbers. The position estimation unit 54 asks the ambient information collection unit 52 to obtain the ambient information in each of the plural estimation positions. The position estimation unit 54 compares the ambient information obtained based on each estimation position and the ambient information stored in the target information storage unit 4. The position estimation unit 54 estimates the estimation position En as the current face position. The ambient information which is most similar to the ambient information stored in the target information storage unit 4 is obtained in the estimation position En. The position estimation unit 54 may be configured not to estimate the current position for the tracking target, when the ambient information similar to the ambient information stored in the target information storage unit 4 is not obtained by any estimation positions.

The determination whether or not the pieces of ambient information are similar to each other can be made by computing the degree of similarity between the pieces of ambient information. For example, the degree of similarity is computed as follows. In the case where the maximum area color is used as the ambient information, for example, a Euclidean distance can be used in the RGB space.

In the case where the color histogram is used as the ambient information, the histogram intersection can be used. Assuming that the two histograms to be compared are set at H and M respectively, the histogram intersection is expressed by the following formula (7). The value $S_{HM}$ ranges from 0 to 1, and the value $S_{HM}$ becomes 1 in the case of the completely same histograms.

**[Formula 7]**

$$S_{HM} = \sum_{i=1}^{N} \min(H_i, M_i) \qquad \text{...... (7)}$$

In the case where the silhouette is used as the ambient information, the normalized correlation between the edge images can be used. The normalized correlation between two images X and Y can be computed by the following formula (8).

**[Formula 8]**

$$R = \frac{\sum_{l=1}^{N}\sum_{k=1}^{M}(X[k,l]-\bar{X})(Y[k,l]-\bar{Y})}{\sqrt{\sum_{k=1}^{M}(X[k,l]-\bar{X})^2}\sqrt{\sum_{l=1}^{N}(Y[k,l]-\bar{Y})^2}} \qquad \text{...... (8)}$$

(Position Output Unit)

The position output unit 6 outputs the face position detected by the face detection unit 51 of the control unit 5 or the face position estimated by the position estimation unit 54 to the outside of the tracking apparatus 1.

(Operation Example)

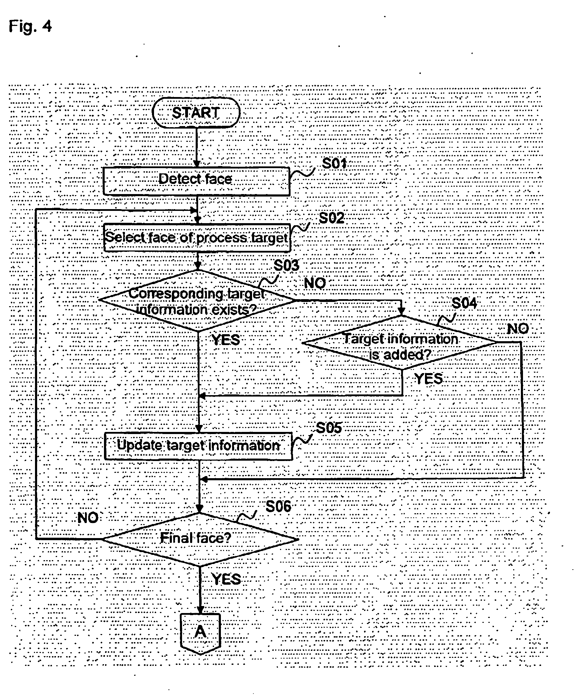

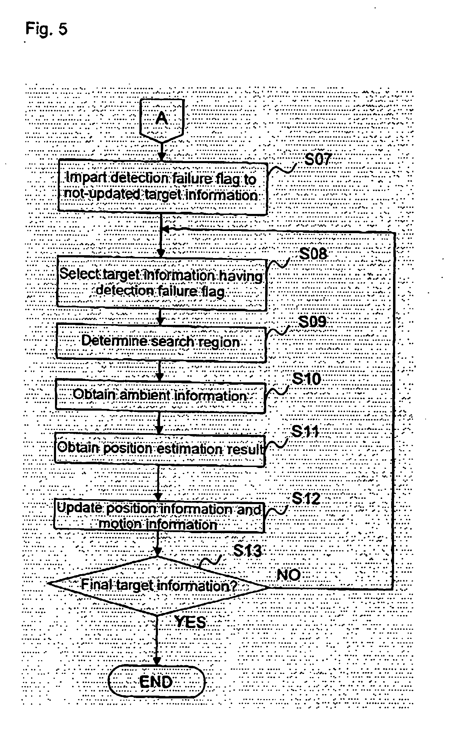

FIGS. 4 and 5 are a flowchart showing an operation example of the tracking apparatus 1. The control unit 5 detects the faces from the image (S01); Then, the control unit 5 selects the face of the tracking target from the detected faces (S02), and the control unit 5 determines whether or not the target information on the tracking target is stored in the target information storage unit 4 (S03). When the target information does not exist (NO in S03), the control unit 5 determines whether or not the target information on the tracking target is newly added to the target information storage unit 4 (S04). The determination is made based on whether or not the tracking target is required to be stored as the target information, e.g., based on the size of the detected face. When the control unit 5 determines that the target information is added (YES in S04), the control unit 5 stores the target information on the new tracking target in the target information storage unit 4 (S05). In the process of S03, when the corresponding target information exists (YES in S03), the control unit 5 updates the target information (S05). The update of the target information shall mean a process of newly obtaining the position information, the motion information, the feature, and the ambient information to store the position information, the motion information, the feature, and the ambient information in the target information storage unit 4.

After the process of S05, or when the control unit 5 determines that the target information is not added in the process of S04 (NO in S04), the control unit 5 determines whether or not the face of the tracking target set at the process target is the final face detected by the face detection unit 51. When the face of the tracking target is not the final face (NO in S06), the control unit 5 selects the unprocessed face (S02) to perform the processes from S03 to S05. On the other hand, when the face of the tracking target is the final face (YES in S06), the face detection unit 51 sets the detection failure flag of the unupdated target information in the target information stored in the target information storage unit 4 (S07).

Then, the position estimation unit 54 selects the target information having the detection failure flag (S08), and the position estimation unit 54 obtains the plural estimation positions based on the position information and motion information in the target information (S09). The position estimation unit 54 obtains the ambient information for each of the plural estimation positions (S10), and the position estimation unit 54 obtains the position estimation result based on the result (S11). The position estimation unit 54 updates the position information, motion information, ambient information of the target information storage unit 4 based on the estimated position (S12). At this point, the update is not performed for the feature, because the face is not detected, i.e., because the feature for detecting the face cannot be obtained.

Then, the control unit 5 determines whether or not the processes of S08 to S12 are ended for all the pieces of target information having the detection failure flags. When the processes of S08 to S12 are not ended, the processes of S08 to S12 are performed based on the unprocessed target information (NO in S13). On the other hand, when the processes of S08 to S12 are ended, the current tracking process is ended. The processes from S01 are repeated if needed.

(Action and Effect)

The tracking apparatus 1 performs the tracking by detecting the face of the tracking target in the image. The current position of each tracking target is stored as the position information in the target information storage unit 4, and the current position of each tracking target is outputted to the outside by the position output unit 6. In the tracking apparatus 1, when the face is hardly detected such that the face of the tracking target is hidden in the shadow or such that the face turns around, the tracking is continued not by detecting the face but by performing the estimation process with the position estimation unit 54. Therefore, even if the state in which the face is hardly detected is generated as described above, the tracking can be continued without losing sight of the tracking target.

Specifically, the current position of the tracking target whose face cannot be detected is roughly estimated by the motion information which is obtained based on the past tracking history, and the plural estimation positions are determined based on the estimated position. The estimation position in which the ambient information having the best similarity to the ambient information stored in the target information storage unit 4 is finally estimated as the current position of the tracking target. Usually the ambient information indicates the information on the cloths of the person of the tracking target when the ambient information obtaining region is set immediately below the face position. In this case, when the face is not detected, the position is estimated based on the ambient information, and thereby the position is estimated based on the color or shape of the cloths of the tracking target.

For example, a predetermined person can be tracked to perform the control so as to focus the person by mounting the tracking apparatus 1 on a video camera. In addition to the focusing control, the tracking apparatus 1 can also be used as a control reference of white balance, and tracking apparatus 1 can also control the direction of the camera such that the person is set in the frame.

(Modification)

In the case where the number of tracking targets is restricted, the face which should be set at the tracking target can also be selected from the plural faces detected by the face detection unit 51. For example, the face detection unit 51 selects the detected faces as the tracking target in the descending order of the face size, and the face detection unit 51 may be configured to determine the selected faces as the tracking targets at the time when the predetermined number of faces is satisfied. The face detection unit 51 may be configured to determine only the largest face as the tracking target. The face detection unit 51 may be configured to determine all the faces having the sizes larger than the predetermined size as the tracking targets. In the case where the face detection unit 51 is configured to be able to perform the identification process, the face detection unit 51 may be configured to select only the particular tracking target previously registered through the identification process.

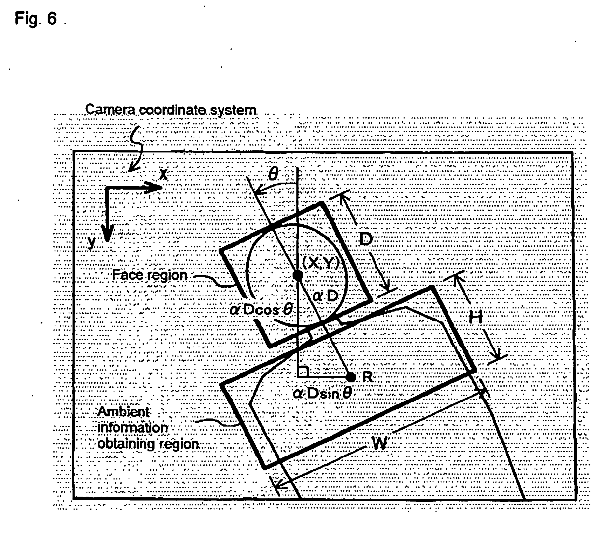

It is preferable that a face inclination be considered in computing the position of the ambient information obtaining region. For example, as shown in FIG. 6, in the case where the rectangular shape indicating the face region is inclined by an angle $\theta$ with respect to a camera coordinate system (image coordinate system), the center coordinate R of the ambient information obtaining region can be computed as shown in a formula (9). Therefore, even if the attitude of the person is inclined, the correct ambient information can be obtained from the body portion of the person.

[Formula 9]

$$R = (X + \alpha D \sin\theta, Y + \alpha D \cos\theta) \quad \ldots\ldots (9)$$

The relative relationship between the face region and the ambient information obtaining region depends on the conditions of the person who is of the tracking target, installation conditions of the camera, and the like. For example, a child differs from an adult in the relative size between the face and the body, and an adult differs from an aged person in the relative size between the face and the body. The case where the camera is installed at the same height as the face differs from the case where the camera is installed higher than the face in the relative size between the face and the body even in the same person. Therefore, it is preferable that the parameter ($\alpha$, $\beta$, and $\gamma$ in the embodiment) for determining the relative relationship between the face region and the ambient information obtaining region be not set at a fixed value, but the parameter be able to be changed according to the conditions of the person, the installation conditions of the camera, and the like. This enables the ambient information to be obtained more correctly.

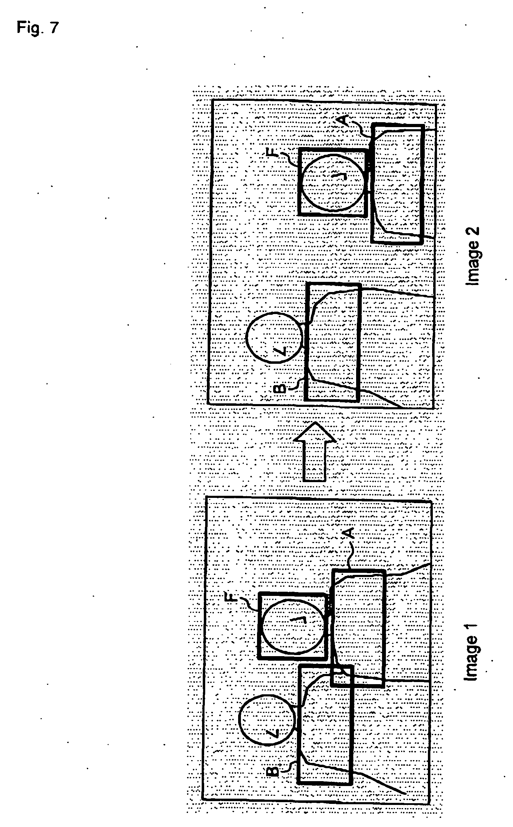

It is also preferable that the tracking apparatus analyze the image to automatically determine the optimum parameter. In FIG. 7, the tracking apparatus sets plural candidate regions A and B around a face region F to analyze the images of plural frames, which investigates the relative speed between the face region F and each of the candidate regions A and B. Then, the candidate region A whose speed relative to the face region F is smaller than the candidate region B is set at the ambient information obtaining region. Therefore, a possibility that the ambient information obtaining region is set at a region (for example, background portion and body portion of another person) totally unrelated to the face of the tracking target can be eliminated to obtain the correct ambient information.

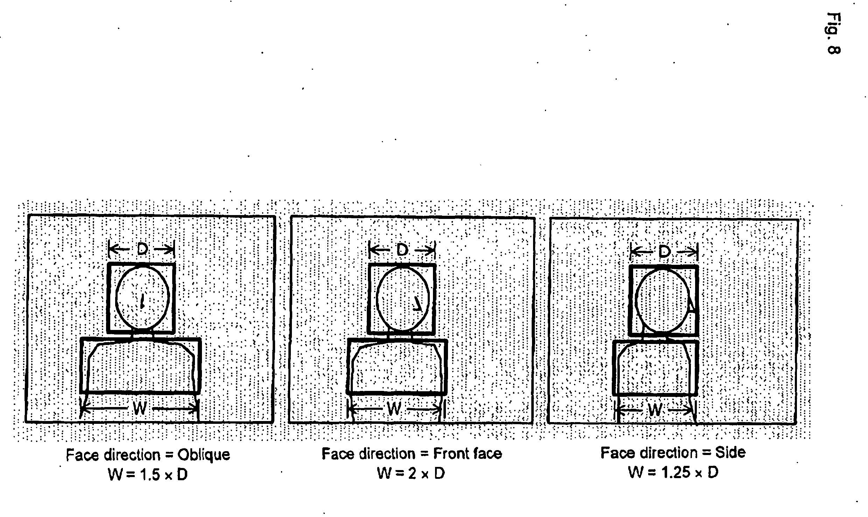

It is also preferable that the face direction be considered in computing the range (position and size) of the ambient information obtaining region. This is because the relative position or relative size between the face and the body is changed according to the directions of the face and body. In FIG. 8, the width of the ambient information obtaining region is changed by correcting the value of the parameter $\beta$ according to the face direction such that the width is set at W=2xD when the face direction is the front side, such that the width is set at W=1.5$\times$D when the face direction is oblique, and such that the width is set at W=1.25xD when the face direction is side. In FIG. 8, the center coordinate (x coordinate) of the ambient information obtaining region is also changed according to the face direction. Thus, when the range of the ambient information obtaining region is changed according to the face direction, the ambient information can be obtained more correctly. The height and the shape (aspect ratio or the like) may be changed, although only the width and position of the ambient information obtaining region are changed in FIG. 8.

In the above embodiment, the ambient information is always updated when the face is successfully detected (refer to S05 of FIG. 4). However, when the tracking person walks past another person or when the tracking person is hidden in the shadow, sometimes the correct ambient information obtaining region (body or the like) is temporarily hidden from a visual field of the camera. In such cases, when the update is performed with the ambient information (body color of another person or the like), there is a fear that a trouble is generated in the subsequent face position estimation. Therefore, in the case where the current image differs largely from the immediately preceding image in the obtained ambient information, it is also preferable to neglect the update, which allows reliability to be improved in the tracking process.

The position estimation unit 54 regards the position candidate, in which the ambient information being most similar to the immediately preceding ambient information is obtained, as the current face position in the above embodiment. However, sometimes an error is generated between the estimated face position and the true face position because the relative position between the ambient information obtaining region and the face is not always maintained. For example, when the face is inclined or when the face is turned toward a direction except the front side, the error is easy to occur. Therefore, it is preferable that the position estimation unit 54 detect the most face-like region from the position candidate and the neighbor of the position candidate to set the detected region at the current face position, after the position estimation unit 54 identifies the position candidate in which the ambient information being most similar to the immediately preceding ambient information stored in the target information storage unit 4 is obtained. Thus, the current face position can be estimated more correctly by searching the face in the restricted range again. For the method of searching the face again, the same technique as the face detection process of the face detection unit 51 can be utilized.

It is also preferable that a conventional tracking technique such as a tracking technique in which a particle filter is utilized and a tracking technique in which mean shift is utilized be combined with the invention.

**Claims**

1. A tracking apparatus (1) which tracks a face position in an image sequence, the tracking apparatus including:

   face detection means (51) for detecting a face from the image;
   storage means (4) in which ambient information, being image feature information in a region near the face of its tracking target, obtained from a region determined by a relative positional relationship with said face position is stored in association with the face position detected by said face detection means (51); and
   estimation means (54) for determining a plurality of position candidates of the current face based on the most recently detected face position instead of the face detection by said face detection means (51), said estimation means (54) obtaining the plurality of pieces of ambient information corresponding to the position candidates, said estimation means (54) determining the current face position based on the position candidate in which the ambient information being most similar to the ambient information associated with said most recently detected face position is obtained;
   wherein the size of said ambient information obtaining region is changed according to the face direction.

2. A tracking apparatus (1) according to claim 1, **characterized by** further including motion information obtaining means (53) which obtains motion information on the face based on said most recently detected face position, wherein said estimation means (54) determines the position candidate based on said most recently detected face position and said motion information.

3. A tracking apparatus (1) according to claims 1 or 2, **characterized in that** a feature is stored in said storage means (4) while associated,
said face detection means (51) determines whether or not the detected face is identical to said most recently detected face based on the feature of the detected face and the feature of said most recently detected face, and
said estimation means (54) estimates the face position which is not detected by said face means device (51) in said most recently detected faces.

4. A tracking apparatus (1) as in any one of claims 1 to 3, **characterized in that** said estimation means (54) determines the position candidate as the current face position, the ambient information which is most similar to the ambient information associated with said most recently detected face position being obtained in the position candidate.

5. A tracking apparatus (1) as in any one of claims 1 to 3, **characterized in that** said estimation means (54) detects the most face-like region from the position candidate, the ambient information which is most similar to the ambient information associated with the most recently detected face position being obtained in the position candidate, and said estimation means (54) determining the detected region as the current face position.

6. A tracking method of tracking a face position in an image sequence, the tracking method including:

a step of detecting a face from the image using an information processing device (5);
a step of storing ambient information being image feature information in a region near the face of its tracking target, obtained from a region in association with the detected face position detected using said information processing device (5), the region being determined by a relative positional relationship with said face position;
a step of determining a plurality of position candidates of the current face based on the most recently detected face position using said information processing device (5);
a step of obtaining a plurality of pieces of ambient information, corresponding to the position candidates using said information processing device (5); and
a step of determining the current face position based on the position candidate using said information processing device (5) instead of the step of detecting said face, the ambient information which is most similar to the ambient information associated with said most recently detected face position being obtained in the position candidate;
wherein the size of said ambient information obtaining region is changed according to the face direction.

7. A computer-implemented program which causes an information processing device (5) to track a face position in a dynamic picture image, wherein the program causes the information processing device (5) to execute the steps of:

detecting a face from the image;
storing ambient information obtained from a region determined by a relative positional relationship with said face position in association with the detected face position the ambient information being image feature information in a region near the face of its tracking target;
determining a plurality of position candidates of the current face based on the most recently detected face position;
obtaining a plurality of pieces of ambient information corresponding to the position candidates; and
determining the current face position based on the position candidate instead of the step of detecting said face, the ambient information which is most similar to the ambient information associated with said most recently detected face position being obtained in the position candidate;
wherein the size of said ambient information obtaining region is changed according to the face direction.

**Patentansprüche**

1. Verfolgungsvorrichtung (1), die die Position eines Gesichts in einer Bildsequenz verfolgt, wobei die Verfolgungsvorrichtung Folgendes umfasst:

ein Gesichtsdetektionsmittel (51) zur Detektion eines Gesichts in dem Bild;
ein Speichermittel (4), in dem Umgebungsinformationen, bei denen es sich um Bildmerkmalsinformationen in einem Bereich nahe des Gesichts des Verfolgungsziels handelt, die aus einem Bereich erhalten werden, der durch die relative Positionsbeziehung zu der Gesichtsposition bestimmt wird, unter Zuordnung der Gesichtsposition gespeichert werden, die durch das Detektionsmittel (51) ermittelt wird; und

ein Schätzungsmittel (54) zur Ermittlung einer Vielzahl möglicher Positionen des aktuellen Gesichts auf Grundlage der zuletzt detektierten Gesichtsposition anstelle der Gesichtsdetektion durch das Gesichtsdetektionsmittel (51), wobei das Schätzungsmittel (54) die Vielzahl an einzelnen Umgebungsinformationen erhält, die den möglichen Positionen entsprechen, wobei das Schätzungsmittel (54) die aktuelle Gesichtsposition auf Grundlage der möglichen Position bestimmt, in der die Umgebungsinformationen der den zuletzt detektierten Gesichtsposition zugeordneten Umgebungsinformationen am ähnlichsten sind;

wobei die Größe des Bereichs, aus dem Umgebungsinformationen erhalten werden, in Abhängigkeit von der Ausrichtung des Gesichts verändert wird.

2. Verfolgungsvorrichtung (1) nach Anspruch 1, **dadurch gekennzeichnet, dass** sie ferner ein Bewegungsinformationsbezugsmittel (53) umfasst, das Bewegungsinformationen auf dem Gesicht auf Grundlage der zuletzt detektierten Gesichtsposition erhält,

wobei das Schätzungsmittel (54) die mögliche Position auf Grundlage der zuletzt detektierten Gesichtsposition und der Bewegungsinformationen ermittelt.

3. Verfolgungsvorrichtung (1) nach Anspruch 1 oder 2, **dadurch gekennzeichnet, dass** ein Merkmal in dem Speichermittel (4) gespeichert wird, während es zugeordnet wird,

wobei das Gesichtsdetektionsmittel (51) auf Grundlage des Merkmals des detektierten Gesichts und des Merkmals des zuletzt detektierten Gesichts bestimmt, ob das detektierte Gesicht mit dem zuletzt detektierten Gesicht identisch ist, und

das Schätzungsmittel (54) die Gesichtsposition schätzt, die durch das Gesichtsdetektionsmittel in den zuletzt detektierten Gesichtern nicht detektiert wird.

4. Verfolgungsvorrichtung (1) nach einem der Ansprüche 1 bis 3, **dadurch gekennzeichnet, dass** das Schätzungsmittel (54) die mögliche Position als die aktuelle Gesichtsposition bestimmt, wobei die Umgebungsinformationen, die den der zuletzt detektierten Gesichtsposition zugeordneten Umgebungsinformationen am ähnlichsten sind, in der möglichen Position erhalten werden.

5. Verfolgungsvorrichtung (1) nach einem der Ansprüche 1 bis 3, **dadurch gekennzeichnet, dass** das Schätzungsmittel (54) den einem Gesicht ähnlichsten Bereich in der möglichen Position detektiert, wobei die Umgebungsinformationen, die den der zuletzt detektierten Gesichtsposition zugeordneten Umgebungsinformationen am ähnlichsten sind, in der möglichen Position erhalten werden und wobei das Schätzungsmittel (54) den detektierten Bereich als aktuelle Gesichtsposition bestimmt.

6. Verfolgungsverfahren zur Verfolgung einer Gesichtsposition in einer Bildfolge, wobei das Verfolgungsverfahren Folgendes umfasst:

einen Schritt des Detektierens eines Gesichts in dem Bild unter Einsatz einer Informationsverarbeitungsvorrichtung (5);

einen Schritt des Speicherns von Umgebungsinformationen, bei denen es sich um Bildmerkmalsinformationen in einem Bereich nahe des Gesichts des Verfolgungsziels handelt, die in einem Bereich erhalten werden, der der detektierten Gesichtsposition zugeordnet ist, die unter Verwendung der Informationsverarbeitungsvorrichtung (5) detektiert wird, wobei der Bereich durch die relative Positionsbeziehung zu der Gesichtsposition bestimmt wird;

einen Schritt des Bestimmens einer Vielzahl an möglichen Positionen des aktuellen Gesichts auf Grundlage der zuletzt detektierten Gesichtsposition unter Verwendung der Informationsverarbeitungsvorrichtung (5);

einen Schritt des Erhaltens einer Vielzahl an Umgebungsinformationen, die den möglichen Positionen entsprechen, unter Verwendung der Informationsverarbeitungsvorrichtung (5); und

einen Schritt des Ermittelns der aktuellen Gesichtsposition auf Grundlage der möglichen Position unter Verwendung der Informationsverarbeitungsvorrichtung (5) anstelle des Schritts des Detektierens des Gesichts, wobei die Umgebungsinformation, die den der zuletzt detektierten Gesichtsposition zugeordneten Umgebungsinformationen am ähnlichsten sind, in der möglichen Position erhalten werden;

wobei die Größe des Bereichs, aus dem die Umgebungsinformationen erhalten werden, in Abhängigkeit von der Ausrichtung des Gesichts verändert wird.

**7.** Durch einen Computer ausgeführtes Programm, dass eine Informationsverarbeitungsvorrichtung (5) veranlasst, eine Gesichtsposition in einem dynamischen Bild zu verfolgen, wobei das Programm die Informationsverarbeitungsvorrichtung (5) veranlasst, folgende Schritte auszuführen:

das Detektieren eines Gesichts in einem Bild;
das Speichern von Umgebungsinformationen, die aus einem Bereich erhalten werden, der durch die relative Positionsbeziehung zu der Gesichtsposition bestimmt wird, unter Zuordnung der detektierten Gesichtsposition, wobei die Umgebungsinformationen Bildmerkmalsinformationen in einem Bereich nahe des Gesichts des Verfolgungsziels sind;
das Bestimmen einer Vielzahl an möglichen Positionen des aktuellen Gesichts auf Grundlage der zuletzt detektierten Gesichtsposition;
das Erhalten einer Vielzahl an Umgebungsinformationen, die den möglichen Positionen entsprechen; und
das Ermitteln der aktuellen Gesichtsposition auf Grundlage der möglichen Position anstelle des Schritts des Detektierens des Gesichts, wobei die Umgebungsinformationen, die den der zuletzt detektierten Gesichtsposition zugeordneten Umgebungsinformationen am ähnlichsten sind, in der möglichen Position erhalten werden; wobei die Größe des Bereichs, aus dem die Umgebungsinformation erhalten werden, in Abhängigkeit von der Ausrichtung des Gesichts verändert wird.

**Revendications**

**1.** Appareil de suivi (1) qui suit une position de visage dans une séquence d'images, l'appareil de suivi comprenant :

des moyens de détection de visage (51) pour détecter un visage à partir de l'image ;
des moyens de stockage (4) dans lesquels les informations ambiantes, étant des informations de caractéristiques d'image dans une région proche du visage de sa cible de suivi, obtenues à partir d'une région déterminée par une relation positionnelle relative par rapport à ladite position de visage sont stockées en association avec la position du visage détectée par lesdits moyens de détection du visage (51) ; et
des moyens d'estimation (54) pour déterminer une pluralité de positions candidates du visage actuel sur la base de la position du visage détectée le plus récemment à la place de la détection de visage par lesdits moyens de détection du visage (51), lesdits moyens d'estimation (54) obtenant la pluralité d'informations ambiantes correspondant aux positions candidates, lesdits moyens d'estimation (54) déterminant la position du visage actuelle sur la base de la position candidate dans laquelle les informations ambiantes étant les plus similaires par rapport aux informations ambiantes associées à ladite position du visage détectée le plus récemment sont obtenues ;
dans lequel la taille de ladite région d'obtention d'informations ambiantes est modifiée en fonction de la direction du visage.

**2.** Appareil de suivi (1) selon la revendication 1, **caractérisé en ce qu'**il comprend en outre des moyens d'obtention d'informations de mouvement (53) qui obtiennent des informations de mouvement sur le visage sur la base de ladite position du visage détectée le plus récemment,
dans lequel lesdits moyens d'estimation (54) déterminent la position candidate sur la base de ladite position du visage détectée le plus récemment et desdites informations de mouvement.

**3.** Appareil de suivi (1) selon les revendications 1 ou 2, **caractérisé en ce qu'**une caractéristique est stockée dans lesdits moyens de stockage (4) alors que
lesdits moyens de détection de visage associés (51) déterminent si le visage détecté est identique ou non audit visage détecté le plus récemment sur la base de la caractéristique du visage détecté et de la caractéristique dudit visage détecté le plus récemment, et
lesdits moyens d'estimation (54) estiment la position de visage qui n'est pas détectée par lesdits moyens de détection de visage (51) dans lesdits visages détectés le plus récemment.

**4.** Appareil de suivi (1) selon l'une quelconque des revendications 1 à 3, **caractérisé en ce que** lesdits moyens d'estimation (54) déterminent la position candidate en tant que position du visage actuelle, les informations ambiantes qui sont les plus similaires aux informations ambiantes associées à ladite position du visage détecté le plus récemment étant obtenues dans la position candidate.

**5.** Appareil de suivi (1) selon l'une quelconque des revendications 1 à 3, **caractérisé en ce que** lesdits moyens d'estimation (54) détectent la région ressemblant le plus à un visage depuis la position candidate, les informations ambiantes qui sont les plus similaires aux informations ambiantes associées à la position du visage détectée le plus récemment étant obtenues dans la position candidate, et lesdits moyens d'estimation (54) déterminant la région détectée en tant que position actuelle du visage.

6. Procédé de suivi consistant à suivre une position de visage dans une séquence d'images, le procédé de suivi comprenant :

une étape de détection d'un visage à partir de l'image au moyen d'un dispositif de traitement d'informations (5) ;
une étape de stockage des informations ambiantes étant des informations de caractéristiques d'image dans une région proche du visage de sa cible de suivi, obtenues à partir d'une région en association avec la position du visage détectée au moyen dudit dispositif de traitement d'informations (5), la région étant déterminée par une relation positionnelle relative par rapport à ladite position de visage ;
une étape de détermination d'une pluralité de positions candidates du visage actuel sur la base de la position du visage détectée le plus récemment au moyen dudit dispositif de traitement d'informations (5) ;
une étape d'obtention d'une pluralité d'informations ambiantes, correspondant aux positions candidates au moyen dudit dispositif de traitement d'informations (5) ; et
une étape de détermination de la position actuelle du visage sur la base de la position candidate au moyen dudit dispositif de traitement d'informations (5) à la place de l'étape de détection dudit visage, les informations ambiantes qui sont les plus similaires aux informations ambiantes associées à ladite position du visage détecté le plus récemment étant obtenues dans la position candidate ;
dans lequel la taille de ladite région d'obtention d'informations ambiantes est modifiée en fonction de la direction du visage.

7. Programme exécuté par ordinateur grâce auquel un dispositif de traitement d'informations (5) suit une position de visage dans une image dynamique, le programme faisant exécuter au dispositif de traitement d'informations (5) les étapes suivantes :

détection d'un visage à partir de l'image ;
stockage des informations ambiantes obtenues à partir d'une région déterminée par une relation positionnelle relative par rapport à ladite position de visage en association avec la position du visage détectée, les informations ambiantes étant des informations de caractéristiques d'image dans une région proche du visage de sa cible de suivi ;
détermination d'une pluralité de positions candidates du visage actuel sur la base de la position du visage détectée le plus récemment ;
obtention d'une pluralité d'informations ambiantes correspondant aux positions candidates ; et
détermination de la position de visage actuelle sur la base de la position candidate à la place de l'étape de détection dudit visage, les informations ambiantes qui sont les plus similaires aux informations ambiantes associées à ladite position du visage détecté le plus récemment étant obtenues dans la position candidate ;
dans lequel la taille de ladite région d'obtention d'informations ambiantes est modifiée en fonction de la direction du visage.

Fig. 1

EP 1 742 169 B1

Fig. 2

| ID | Position information | Motion Information | Feature quantity | Ambient information | Detection failure flag |
|----|----|----|----|----|----|
| 1 | X1, Y1 | Vx1, Vy1 | S1 | R1 | 0 |
| 2 | X2, Y2 | Vx2, Vy2 | S2 | R2 | 0 |
| 3 | X3, Y3 | Vx3, Vy3 | S3 | R3 | 1 |
| ⋮ | ⋮ | ⋮ | ⋮ | ⋮ | ⋮ |

EP 1 742 169 B1

Fig. 3

Detected position

Ambient information obtaining region

Fig. 4

```
                    ┌──────────┐
                    │  START   │
                    └────┬─────┘
                         │
                         ▼                    S01
              ┌──────────────────────┐   ⌇
              │     Detect face      │
              └──────────┬───────────┘
                         │
                         ▼                    S02
              ┌──────────────────────┐   ⌇
      ┌──────►│ Select face of process target │
      │       └──────────┬───────────┘
      │                  │             S03
      │                  ▼        ⌇        NO
      │           ╱─────────────╲ ────────────────┐
      │          ╱ Corresponding  ╲               │
      │          ╲ target          ╱              ▼               S04
      │           ╲information exists?            ╱──────────────╲   ⌇        NO
      │            ╲──────┬──────╱               ╱ Target information ╲ ──────────┐
      │              YES  │                      ╲  is added?         ╱          │
      │                   │                       ╲────────┬────────╱           │
      │                   │                           YES  │                    │
      │                   │◄────────────────────────────────┘                   │
      │                   │                                                      │
      │                   ▼                    S05                               │
      │        ┌──────────────────────┐   ⌇                                     │
      │        │ Update target information │                                    │
      │        └──────────┬───────────┘                                         │
      │                   │◄──────────────────────────────────────────────────┘
      │                   │                S06
      │       NO          ▼           ⌇
      └──────────────╱─────────────╲
                    ╱   Final face?  ╲
                     ╲──────┬──────╱
                        YES │
                            ▼
                       ┌─────────┐
                       │    A    │
                       └─────────┘
```

EP 1 742 169 B1

Fig. 5

Fig. 6 .

Fig. 7

Image 1    Image 2

Face direction = Oblique
W = 1.5 × D

Face direction = Front face
W = 2 × D

Face direction = Side
W = 1.25 × D

Fig. 8

EP 1 742 169 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004283959 A

- JP 6022195 A

**Non-patent literature cited in the description**

- **A. Micilotta et al.** View-based Location and Tracking of Body Parts for Visual Interaction. *Proc. British Machine Vision Conference,* 09 September 2004

- **Pérez et al.** Color-Based Probabilistic Tracking. *European Conference on Computer Vision,* 2002, 661-675